Europäisches Patentamt

European Patent Office

Office européen des brevets

(11) Publication number: **0 474 234 A2**

# EUROPEAN PATENT APPLICATION

(21) Application number: **91115023.3**

(22) Date of filing: **05.09.91**

(51) Int. Cl.5: **G09G 5/34**, G06F 3/033

(30) Priority: **07.09.90 JP 238360/90**

(43) Date of publication of application:
**11.03.92 Bulletin 92/11**

(84) Designated Contracting States:
**AT CH DE DK FR GB LI NL**

(71) Applicant: **KABUSHIKI KAISHA DAINICHI**
**35-7, Yoyogi 1-chome**
**Shibuya-ku, Tokyo 151(JP)**

(72) Inventor: **Shoji, Wataru, c/o Kabushiki Kaisha**
**Dainichi**
**1-35-7, Yoyogi**
**Shibuya-Ku, Tokyo-To(JP)**
Inventor: **Tabuchi, Daisuke, c/o Kabushiki**
**Kaisha Dainichi**
**1-35-7, Yoyogi**
**Shibuya-Ku, Tokyo-To(JP)**
Inventor: **Nakajima, Ichiro, c/o Kabushiki**
**Kaisha Dainichi**
**1-35-7, Yoyogi**
**Shibuya-Ku, Tokyo-To(JP)**

(74) Representative: **Klunker . Schmitt-Nilson .**
**Hirsch**
**Winzererstrasse 106**
**W-8000 München 40(DE)**

(54) **Scroll control system.**

(57) The scroll control system comprises a mouse (1) for inputting cursor displacement data; a cursor shifting section (27, 11) for shifting a cursor in accordance with the cursor displacement data from the mouse; a cursor displacement calculator (35) for calculating the cursor displacement from a central point within a window on the basis of the cursor displacement data and the window central point coordinates; and a scrolling section (37, 43, 9) for scrolling images within the window in a direction and a speed according to cursor direction and distance from the window central point on the basis of the cursor displacement calculated by the cursor displacement calculator. When the cursor is moved by the mouse, scroll is made in linkage with cursor motion. The direction and speed of the scroll are determined on the basis of the direction and distance of the cursor from a central point in a window.

FIG. I

## BACKGROUND OF THE INVENTION

The present invention relates to a scroll control system for controlling picture scrolling in computer graphics.

In the general scrolling method in computer graphics, whenever a cursor reaches a picture edge, an image outside the edge is scrolled into the picture. In this case, the scroll speed is constant.

In order to improve the picture manipulatability, it is preferable that the distance of the cursor to be moved is small. In the prior-art method, the scroll manipulatability is not satisfactorily high from this standpoint. Further, it is preferable that the scroll speed is variable as occasion demands.

## SUMMARY OF THE INVENTION

With these problems in mind, therefore, it is the object of the present invention to provide a scroll control system by which picture can be scrolled in any desired direction at any desired speed by simple and slight cursor operation.

To achieve the above-mentioned object, the present invention provides a scroll control system for computer graphics, in which an image selectively read from an image memory is displayed in at least one scrollable window arranged on a picture and further a shiftable cursor is also displayed on the picture, comprising: (a) external inputting means for inputting displacement information data to shift the cursor; (b) cursor shifting means for shifting the cursor in accordance with the displacement information data from the external inputting means; (c) cursor displacement calculating means for calculating the cursor displacement from a reference position on the basis of the displacement information data and a predetermined reference position coordinates within the picture; and (d) scrolling means for scrolling images within the window in a direction and a speed, according to cursor direction and distance from the reference position, on the basis of the cursor displacement calculated by the calculating means.

According to the present invention, when the cursor is moved by use of the external inputting means, for instance such as a mouse, the scroll operation can be made in linkage with the cursor movement. The direction and speed of the scroll are determined on the basis of the direction and distance between the cursor and a predetermined reference position within the picture. Therefore, the scroll can be executed in any desired direction at any desired speed by first locating the cursor at the reference position and then shifting the cursor in any desired direction therefrom.

## BRIEF DESCRIPTION OF THE DRAWINGS

Fig. 1 is a block diagram showing an overall system configuration of an embodiment of the present invention;
Fig. 2 is an illustration for assistance in explaining the operation of the present invention; and
Fig. 3 is a block diagram showing the scroll rate calculating section.

## DETAILED DESCRIPTION OF THE PREFERRED EMBODIMENTS

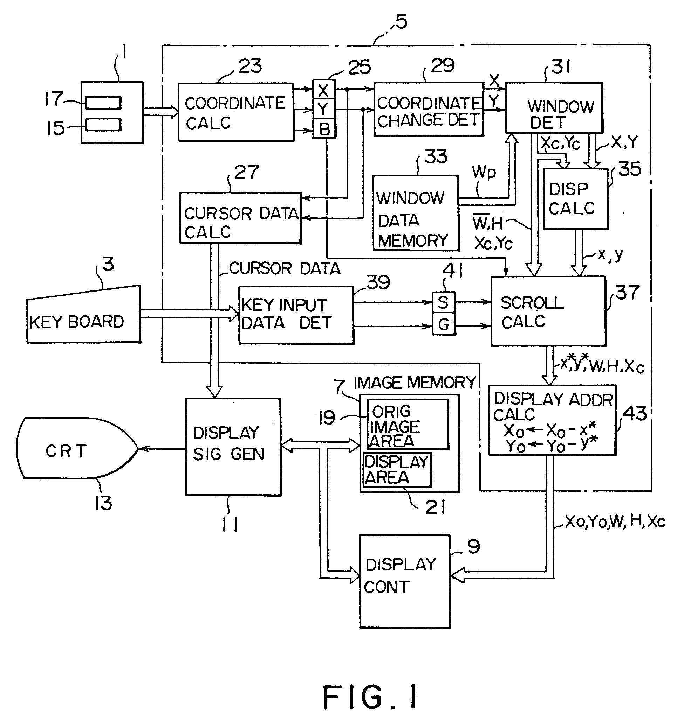

Fig. 1 shows an embodiment of the scroll control system according to the present invention.

The system comprises a mouse 1, a keyboard 3, a host processor 5, an image memory 7, a display controller 9, a display signal generator 11 and a CRT display unit 13.

The mouse 1 and the keyboard 3 are well known and used in general personal computers. The mouse 1 generates displacement signals according to the movement thereof. The displacement signals are given to the host processor 5 and used to determine the up-and-down shift rate of the cursor and the direction and speed of the scroll. In general, the mouse 1 is provided with two buttons 15 and 17. The button 15 is referred to as the right button and the button 17 is referred to as the left button 17 hereinafter. In this embodiment, the right button 15 is used to select whether the scroll is required or not. A keyboard made by NEC (Nippon Electric Company) is used as the keyboard 3 for the convenience of explanation of key names. A shift key (SHIFT) and a graph key (GRPH) of this keyboard 3 are used as a scroll speed mode selecting key. That is, when the shift key is depressed, a high speed mode is selected; when a graph key is depressed, a low speed mode is selected; and when both the keys are not depressed, a variable speed mode can be selected. In this variable speed mode, the scroll speed changes according to the cursor shift rate determined on the basis of the displacement signals. The larger the cursor shift rate is, the higher will be the scroll speed.

In response to the displacement signals of the mouse 1, the host processor 5 generates cursor information data (referred to as cursor data, hereinafter) for deciding a cursor position within a CRT picture. In this embodiment, a so-called cross hair cursor (in which vertical and horizontal lines are crossed) is used. In this case, the cursor data are composed of the widths of the respective vertical and horizontal lines and the coordinates at the start and end points. Among these cursor data, the start point coordinates and the end point coordinates are changed according to the displacement signals of the mouse 1.

Further, on the basis of the displacement signals of the mouse 1, the host processor 5 generates scroll information data (referred to as scroll data, hereinafter) for executing scrolling of the CRT picture. In the CRT picture, at least one window is displayed. The size and display position of each window are previously determined. Each of the windows is previously determined as to whether the window is scrollable or not according to the kinds of images displayed therewithin. Various window information data (referred to as window data, hereinafter) for determining window attributes such as window size (e.g. vertical and horizontal widths), window position (e.g. center coordinates), scrollability, etc. are all previously stored in the host processor 5. Therefore, the host processor 5 can discriminate the window within which the cursor is located with reference to these window data. If the window where the cursor is located is scrollable and the right button 15 of the mouse 1 is depressed, the post processor 5 generates scroll data related to the window on the basis of the displacement signals of the mouse 1. These scroll data include the size and position of the window to be scrolled, and a start point address (within the image memory) of an image to be displayed in the window. These scroll data are given to the display controller 9. The host processor will be described in more detail later.

The image memory 7 includes two kinds of storage areas 19 and 21. The area 19 is referred to as an original image area and the area 21 is referred to as a display area. In the original image area 19, a great amount of graphic data (not displayed at once on the CRT picture) are previously stored. Therefore, part of data stored in this original image area 19 are selectively read and written in the display area 21. The quantity of data stored in this display area 21 matches those displayable at once on the CRT picture. Data are read from the display area 21 in raster method and then given to the display signal generator 11. The given data are converted into video signals by this generator 11 and then displayed on the CRT picture.

The display controller 9 controls the data read/write operation from the original image area 19 to the display area 21 and the data read operation from the display area 21 to the display signal (cursor) generator 11. In other words, the display controller 9 selectively reads an image to be displayed in each window from the original image area 19 and write these read data to each area corresponding to each window within the display area 21. In this operation, the image to be displayed within a scrollable window is selected in accordance with the scroll data from the host processor 5. The scroll data are periodically given from the host processor 5. Whenever the start point address of an image included in the scroll data changes along a predetermined route, the display controller 9 successively rewrites images stored in the corresponding window areas in the display area 21 along the above route, with the result that the window can be scrolled. A well-known device is used as the display controller 9.

The display signal generator 11 generates graphics data for displaying the cross hair cursor in accordance with the cursor data from the host processor 5. Further, this display signal (cursor) generator 11 receives graphics data read from the display area 21 of the image memory 7, combines these read data with other graphics data for displaying the cursor, converts the combined data into video signals, and transmits the converted video signals to the CRT display unit 13, with the result that an image in which a cross hair cursor is overlapped with an image stored in the display area 21 is displayed on the CRT picture.

As this display signal generator 11, it is preferable to use the one as disclosed in Japanese Patent Appli. No. 2-107765, for instance.

The host processor 5 will be described in detail hereinbelow.

The host processor 5 comprises a coordinate calculator 23, a register 25, a cursor data calculator 27, a coordinate change detector 29, a window detector 31, a window data memory 33, a displacement calculator 35, a scroll rate calculator 37, a key input data detector 39, another register 41, and a display address calculator 43.

With reference to Fig. 1, the coordinate calculator 23 periodically samples input data from the mouse 1, calculates cursor coordinates X, Y or the CRT picture on the basis of displacement signals from the mouse 1, and discriminates whether the right button 15 of the mouse 1 is turned on or off. The calculated cursor coordinates X, Y and the button data B indicative of the on/off condition of the right button 15 are stored in the register 25.

The cursor coordinates X, Y stored in the register 25 are periodically read by the cursor data calculator 27. The cursor data calculator 27 calculates start and end point coordinates of the vertical and horizontal cursors, respectively so that the cross point of the cross hair cursor matches the cursor coordinates X, Y. The cursor data including the calculated start and end point coordinates of both the vertical and horizontal cursors and previously determined widths of the vertical and horizontal cursors are transmitted to the display signal generator 11, so that the cross hair cursor movable in response to the movement of the mouse 1 can be displayed on the CRT picture.

Further, the cursor coordinates X, Y stored in the register 25 are periodically read by the coordinate change detector 29. Since having held the preceding cursor coordinates previously read from the register 25, the coordinate change detector 29 compares the preceding cursor coordinates and the newly read current cursor coordinates X, Y to discriminate presence or absence of change in the cursor coordinates. Only when a change is discriminated, the coordinate change detector 29 transmits the current cursor coordinates X, Y to the window detector 31.

In response to the transmitted cursor coordinates X, Y, the window detector 31 refers to window data Wp of each window previously stored in the window data memory 33. As already described, the window data Wp are attribute data of each window such as width W, height H, coordinates Xc, Yc of a central point on the CRT picture (referred to as center coordinates, hereinafter), scrollability, etc. On the basis of the width W, height H, and the center coordinates Xc, Yc of each window, the window detector 31 detects a window which includes the cursor coordinates X, Y, and further discriminates whether the detected window is scrollable or not. Only when the detected window is scrollable, the center coordinates Xc, Yc of the window and the cursor coordinates X, Y are transmitted to the displacement calculator 35. In addition, the width W, height H, and the center coordinates Xc, Yc of the window are transmitted to the scroll rate calculator 37.

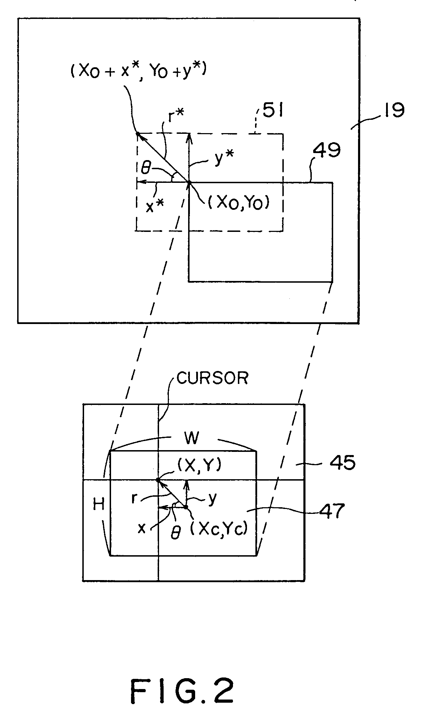

The displacement calculator 35 obtains displacements x, y (referred to as cursor displacements, hereinafter) of the cursor coordinates X, Y from the window center, by subtracting the cursor coordinates X, Y from the window center coordinates Xc, Yc. In more detail with reference to Fig. 2 in which an original image area 19 in the image memory 7 and an example of CRT picture are shown illustratively. In the CRT picture 45 shown in Fig. 2, the cursor coordinates X, Y are located within a scrollable window 47, and the cursor displacements x, y are differences between the cursor coordinates X, Y and the window center coordinates Xc, Yc. The cursor displacements x, y are given to the scroll rate calculator 37.

The key input data detector 39 scans the keyboards 3 to detect the respective on/off conditions of the respective keys. The on/off conditions of the shift key and the graph key are stored in the register 41 as a shift key data S and a graph key data G and then given to the scroll rate calculator 37.

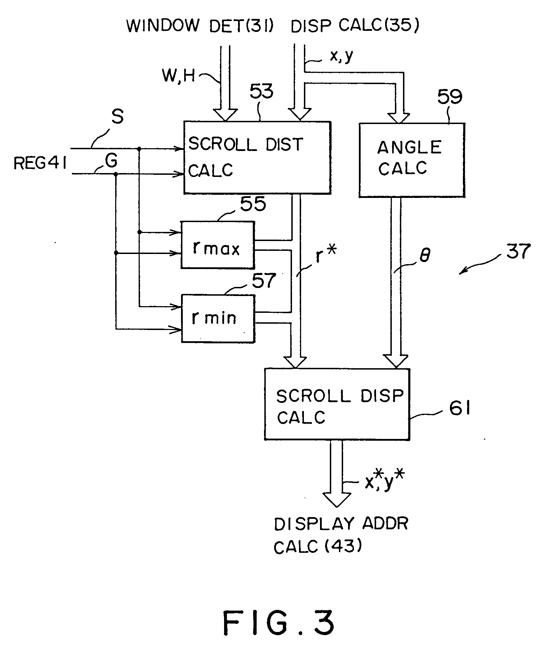

The scroll rate calculator 37 is activated to decide a scroll rate, only when the button data B stored in the register 25 indicates the turn-on condition and further the cursor displacements x, y transmitted from the displacement calculator 35 are not zero. Fig. 3 shows a scroll rate deciding section in the scroll rate calculator 37.

In Fig. 3, the scroll rate deciding section comprises a scroll distance calculator 53, an angle calculator 59, a scroll displacement calculator 61, and two registers 55 and 57. The scroll distance calculator 53 calculates a scroll distance $\gamma^*$ on the basis of the * cursor displacements x, y and the window size W, H, where the scroll distance $\gamma^*$ denotes the distance between an image now displayed and an image next displayed in the window. In more detail with reference to Fig. 2, if an image now displayed in the window 47 is a subimage 49 stored in the original image area 19 and further an image next displayed is a subimage 51 as shown by dashed lines, the scroll distance is a distance $\gamma^*$ between these two subimages. In practice, the scroll distance $\gamma^*$ can be calculated as follows: First, a cursor distance $\gamma$ (as shown in Fig. 2) between the window center and the cursor coordinates is obtained on the basis of the cursor displacements x, y. Next, the obtained cursor distance $\gamma$ is corrected by the window size W, H. For instance, either smaller value of the width W or height H of the window is selected and the cursor distance $\gamma$ is multiplied by this selected value. By this correction, if the window size is small, the scroll speed is determined low; and if the window size is large, the scroll speed is determined high even when the cursor distance $\gamma$ is the same. The scroll distance $\gamma^*$ can be obtained by multiplying the corrected cursor distance by an appropriate constant. Further, the scroll distance calculator 53 is activated to execute the above-mentioned calculation, only when the shift key data S and the graph key data G stored in the register 41 indicate both the turn-off condition.

Where the shift key data S indicates the turn-on condition, the register 55 outputs the scroll distance $\gamma^*$. Since the maximum scroll distance $\gamma_{max}$ is previously stored in this register 55, this maximum value $\gamma_{max}$ is outputted as the scroll distance $\gamma^*$. On the other hand, when the graph key data G indicates the turn-on condition, the register 57 outputs the scroll distance $\gamma^*$. Since the minimum scroll distance $\gamma_{min}$ is stored in this register 57, this minimum value $\gamma_{min}$ is outputted as the scroll distance $\gamma^*$. As a result, if the shift key is on, a high speed scroll is selected; if the graph key is on, a low speed scroll is selected; and if both are off, a variable speed scroll is selected.

The angle calculator 59 calculates an angle $\theta$ (shown in Fig. 2) (referred to as azimuth, hereinafter) which indicates the cursor direction when seen from the window center on the basis of the cursor displacements x, y.

The calculated scroll distance $\gamma^*$ and the azimuth $\theta$ are inputted to the scroll displacement calculator 61. The scroll displacement calculator 61 calculates scroll displacements x*, y* indicative of scroll rates in both the X and Y directions by multiplying the scroll distance $\gamma^*$ by $\cos\theta$ and $\sin\theta$, respectively.

With reference to Fig. 1 again, the scroll rate calculator 37 gives the calculated scroll displacements x*, y* to the display address calculator 43, together with the window data, W, H, Xc and Yc of the window to be scrolled which are transmitted from the window detector 31. The display address calculator 43 calculates a new start point address by adding the scroll displacements x*, y* to the start point address of an image now displayed in the window. In Fig. 2, for instance, if the image 49 is now being displayed, the new start point address coordinates Xo, Yo are replaced with the coordinates Xo + x*, Yo + y* obtained by adding the scroll displacements x*, y* to the start point address coordinates Xo, Yo. This indicates a scroll operation from the image 49 to the image 51.

The new start point address Xo, Yo thus obtained are given to the display controller 9 together with the window data W, H, Xc and Yc of the window to be scrolled. The display controller 9 reads graphics data from the subimage 51 (see Fig. 2) within the original image area 19 which is specified by the new start point address Xo, Yo and the window size W, H, and writes them in the subarea in the display area 21 specified by the window data W, H, Xc and Yc. As a result, an image in the window 47 on the CRT picture 45 is scrolled from the image 49 to the new image 51 (see Fig. 2).

The above-mentioned operation is repeated at a predetermined period whenever the mouse 1 is moved, so that the cursor is shifted in linkage with the window scroll. In this operation, the scroll direction is the same as the direction that the cursor is shifted from the window center. Further, in the case of the variable speed mode, the scroll speed is proportional to the distance between the cursor and the window center.

Further, the present invention is not limited to the above embodiment, but includes various modifications. For instance, all the sections of the embodiment can be realized by use of only hardware circuits, or else part or all of the sections thereof can be realized by a computer operated in accordance with programs.

As described above, in the scroll control system according to the present invention, since the scroll is linked with the cursor shift motion and additionally the scroll direction and speed can be determined according to the cursor direction and distance from a predetermined reference position, it is possible to facilitate controlling of scroll operation and thus provide a higher manipulability to computer graphics.

## Claims

1. A scroll control system for computer graphics, in which an image selectively read from an image memory (7) is displayed in at least one scrollable window (47) arranged on a picture (15) and further a shiftable cursor is also displayed on the picture (45), comprising:

   (a) external inputting means (1) for inputting displacement information data to shift the cursor;

   (b) cursor shifting means (23,27) for shifting the cursor in accordance with the displacement information data from said external inputting means (1);

   (c) cursor displacement calculating means (35) for calculating the cursor displacement from a reference position on the basis of the displacement information data and a predetermined reference position coordinates within the picture (45); and

   (d) scrolling means (5,11) for scrolling images within the window (47) in a direction and a speed, according to cursor direction and distance from the reference position, on the basis of the cursor displacement calculated by said calculating means (35).

2. The scroll control system of claim 1, wherein said scrolling means (5,11) comprises:

   (a) scroll displacement calculating means (37) for calculating a displacement from an image now displayed in the window (47) to an image next to be displayed on the basis of the cursor displacement calculated by said cursor displacement calculating means (35);

   (b) display address calculating means (43) for calculating an address within the image memory (7) indicative of an image to be displayed next on the basis of a value calculated by said scroll displacement calculating means (37); and

   (c) display means for reading image to be displayed next from the image memory (7) in accordance with an address calculated by said display address calculating means (43) and displaying the read image in the window (47).

3. The scroll control system of claim 1 or 2, wherein the reference position is located at a central point within the window (47).

FIG. 1

$(X_0 + x^*, Y_0 + y^*)$

51

19

49

$r^*$

$\theta$

$y^*$

$x^*$

$(X_0, Y_0)$

CURSOR

W

$(X, Y)$

45

H

$r$

$y$

47

$x$

$\theta$ $(X_c, Y_c)$

# FIG.2

7

WINDOW DET(3I)  DISP CALC(35)

x,y

W,H

S

REG4I

G

53

59

SCROLL DIST
CALC

ANGLE
CALC

55

rmax

r*

θ

37

57

r min

SCROLL DISP
CALC

x,*y*

61

DISPLAY ADDR
CALC (43)

# FIG.3